# EUROPEAN PATENT APPLICATION

(11) **EP 2 775 428 A1**
(43) Date of publication of application: **10.09.2014**
(21) Application number: 13193869.8
(22) Date of filing: 21.11.2013
(51) Int. Cl.: G06Q 10/00

(54) **Automatic preference-based waitlist and clearance for accommodations**

(30) Priority: 06.03.2013 US 201313787561
(71) Applicant: Accenture Global Services Limited, Dublin 4 (IE)
(72) Inventor: Sink, Raelynn A., Lakeville, MN 55044 (US); Hornbaker, Terry Wayne, Holladay, UT 84121 (US); Montero, Richard Joseph Lamprea, 1226 Makati City (PH)
(74) Representative: Schley, Jan Malte

(57) **Abstract**

Methods, systems, and apparatus, including computer programs encoded on a computer storage medium, are described for a reservation system. In one aspect, the reservation system can receive a request to select a preferred accommodation for a customer from a user of the reservation system, identify available first accommodations from a plurality of accommodations, and determine that the preferred accommodation for the customer is not available for selection by the user from the available first accommodations. In response, the system can place the request for the preferred accommodation on a waitlist. In response to receiving an indication of an occurrence of an event, the system can automatically identify one or more available second accommodations from the plurality of accommodations, determine that the preferred accommodation for the customer is available for selection from the one or more available second accommodations, and assign the available preferred accommodation to the customer.

## Description

### TECHNICAL FIELD

This specification generally describes systems and processes for assigning one or more travel accommodations to one or more travelers.

### BACKGROUND

Certain online reservation systems are used to make travel reservations. For example, online reservation systems can receive a destination and date for travel from a user. The received destination and date of travel can be used as criteria to perform a search to determine whether a travel accommodation (e.g., a seat) in a travel unit (e.g., an aircraft) is available. The search may identify one or more available travel accommodations that correspond to the received date and destination details. In some cases, the available travel accommodations may not include the user's preferred accommodation. In other cases, the search may not locate any available travel accommodations that correspond to the received date and destination details. In one or both of these cases, the user may decide to be placed on a waitlist for the travel accommodation.

### SUMMARY

In general, innovative aspects of the subject matter described in this specification may be embodied in methods that include actions of receiving a request to select a preferred accommodation for a customer from a user of the reservation system, identifying one or more available first accommodations from a plurality of accommodations, determining that the preferred accommodation for the customer is not available for selection by the user from the one or more available first accommodations, and in response, placing the request for the preferred accommodation on a waitlist, receiving an indication of an occurrence of an event, and in response to receiving the indication of the occurrence of the event, automatically: identifying, by the reservation system, one or more available second accommodations from the plurality of accommodations, determining, by the reservation system, that the preferred accommodation for the customer is available for selection from the one or more available second accommodations, and assigning, by the reservation system, the available preferred accommodation to the customer.

Other implementations of these aspects include corresponding systems, apparatus, and computer programs, configured to perform the actions of the methods, encoded on computer storage devices.

These and other implementations may each optionally include one or more of the following features. For instance, the actions further include assigning an alternate accommodation to the customer based on determining that the preferred accommodation for the customer is not available for selection by the user, where the alternate accommodation is included in the one or more first accommodations, and where automatically assigning the available preferred accommodation to the user includes automatically reassigning the customer's accommodation from the alternate accommodation to the preferred accommodation. The preferred accommodation is included in a group of accommodations identified as preferable to another group of accommodations that includes the alternate accommodation. The customer is one of a group of customers, and the preferred accommodation is one of a plurality of accommodations, where each of the plurality of accommodations is assigned to each of the customers included in the group of customers, the assignment based on one or more criteria specified by the group of customers. Automatically reassigning the customer's accommodation from the alternate accommodation to the preferred accommodation includes removing the preferred accommodation from the one or more available second accommodations and including the alternate accommodation in the one or more available second accommodations. The actions further include automatically determining, by the reservation system, that another preferred accommodation for another customer is available for selection from the one or more available second accommodations, where the other preferred accommodation for the other customer is included on the waitlist, and automatically assigning, by the reservation system, the available other preferred accommodation to the other customer. The event includes one of a change in availability of the plurality of accommodations, an increase in a number of accommodations included in the plurality of accommodations, and a point in time. The point in time occurs at regular time intervals or at a specified time. The specified time is identified based on one or more criteria associated with the accommodation. A frequency of the regular time intervals increases as an identified milestone associated with the accommodation approaches. The change in availability of the plurality of accommodations includes one of an unblocking of accommodations, a release of accommodations, a physical reconfiguration of accommodations, a marketing reconfiguration of accommodations, and a sales reconfiguration of accommodations. The increase in a number of accommodations included in the plurality of accommodations includes a change in a provider of the accommodations. The user causes the event to occur. The waitlist includes requests listed in a hierarchical order and placing the request for the preferred accommodation on the waitlist includes adding the request to the waitlist at a location in the hierarchical list, the location based on one or more criteria associated with the customer and/or the travel record. Automatically assigning the available preferred accommodation to the customer includes determining that the customer is eligible for assignment to the accommodation based on the location of the request for the preferred accommodation on the waitlist. The actions further include automatically removing, by the reservation system, the request for the preferred accommodation from the waitlist in response to automatically assigning the available preferred accommodation to the customer. The accommodation includes one of a seat on an airplane, train, or bus, a room in a hotel, a time and date reservation at a spa, and a cabin on a cruise ship.

Particular implementations of the subject matter described in this specification may be provided so as to realize one or more of the following advantages. Travelers can be waitlisted for a preferred accommodation that can be automatically assigned to the traveler (or reassigned to the traveler in the case where the traveler is assigned an alternate accommodation) without any intervention by the traveler. In addition, the traveler is automatically notified of the preferred accommodation assignment. The traveler does not have to periodically check back with the travel accommodation provider for the possible availability of their preferred accommodation, hoping that they get lucky and happen to check back right at the moment when the preferred accommodation is available. The traveler is evaluated for the preferred accommodation based on passenger value parameters defined by the carrier, and is able to obtain the preferred accommodation first, based on relative ranking to other travelers. The disclosed system and methods eliminate the need for any traveler intervention and significantly improves the chances of the travel being assigned their preferred accommodation.

The details of one or more implementations of the subject matter described in this specification are set forth in the accompanying drawings, and the description, below. Other features, aspects and advantages of the subject matter will be apparent from the description and drawings, and from the claims.

### BRIEF DESCRIPTION OF DRAWINGS

FIG. 1 is a block diagram illustrating an example system that can execute implementations of the present disclosure.

FIG. 2 is a diagram of an example seating plan for a travel conveyance that includes waitlist selections for a passenger.

FIG. 3 is a diagram of an example seating plan for a travel conveyance that includes a waitlist selection for a group of passengers.

FIG. 4 is a diagram of an example seating plan for a travel conveyance that includes an advisory that indicates a passenger has a preferred assigned seat and is not being waitlisted for another seat assignment.

FIG. 5 is a diagram of an example seating plan for a travel conveyance that includes an advisory that indicates a passenger is waitlisted for a requested preferred seat.

FIG. 6 is a diagram of an example seating plan for a travel conveyance that includes an advisory that indicates a passenger has been assigned a preferred seat.

FIG. 7 is a diagram of an example seating plan for a travel conveyance that includes an advisory that indicates a passenger has been assigned their requested preferred seating for their party.

FIGs. 8A-C are diagrams of example seating plans for a travel conveyance that show assigned and requested seats for a plurality of passengers included on a waitlist.

FIG. 9 depicts an example process for determining whether a requested preferred seat is available for assignment to a passenger.

FIG. 10 depicts an example process for determining whether a requested preferred seat that a passenger is waitlisted for is available for assignment to the passenger.

Like reference symbols in the various drawings indicate like elements.

### DETAILED DESCRIPTION

In the following text, a detailed description of examples will be given with reference to the drawings. It should be understood that various modifications to the examples may be made. In particular, elements of one example may be combined and used in other examples to form new examples.

For purposes of illustration, a non-limiting example context is provided herein. The example context is directed to a travel accommodation including a seat on a travel conveyance. In some examples, a travel conveyance can include an airplane, a train, a bus and a ship (e.g., a cruise ship). Although implementations of the present disclosure are discussed in the example context of seats on a travel conveyance, it is appreciated that the present disclosure is applicable in other contexts. In some examples, a travel accommodation can include a room on a travel conveyance (e.g., a room on a cruise ship). In some examples, a non-travel accommodation can be considered and can include an entertainment accommodation such as a seat in an auditorium, stadium, theater or similar facilities. In some examples, an accommodation can include a room such as a hotel room or a suite within an entertainment facility. In some examples, an accommodation can include a seat/section at an event such as a concert hall or theater venue, or a time/date reservation for a theme park attraction or a spa treatment.

Within the example context of a seat on a travel conveyance, a user places a reservation through a reservation system to travel to a certain destination on a specific travel date as a passenger on a particular travel conveyance. For example, the user wishes to travel by plane from Minneapolis to Atlanta on June 17, 2013. The reservation system receives the details of the reservation that includes a request for assignment to a preferred seat on the particular travel conveyance. The reservation system determines if the user is eligible to be assigned to the preferred seat. For example, a travel accommodation group includes a group of seats on the travel conveyance that a passenger is eligible for. If the preferred seat is included in a travel accommodation group that the user is eligible for and the preferred seat is available for assignment to the user (e.g., it is not blocked or assigned to another passenger) then the reservation system can assign the preferred seat to the user.

The reservation system can determine that the user is not eligible to be assigned to the preferred seat because the preferred seat is included in a travel accommodation group that is not available to the user. For example, the preferred seat is included in a travel accommodation group designated for a platinum elite travel club member and the user is a silver travel club member (a lower level than the platinum elite level), the reservation system will inform the user that they cannot select that particular preferred seat for assignment and the reservation system can allow the user to identify another seat for possible assignment. Alternatively, if the reservation system determines that the user is eligible to be assigned to the preferred seat, and if the preferred seat is available, the reservation system can assign the identified seat to the user. For example, the preferred seat is included in a travel accommodation group designated for business class travelers and the user is eligible to travel in business class.

In some implementations, operations can be performed automatically, indicating that the operations are performed in response to an occurrence without requiring user input. For example, in some cases, the reservation system determines that the user is eligible to be assigned to the preferred seat but the preferred seat is not currently available. In these cases, the user can be placed on a waitlist in order to be automatically assigned to the preferred seat if and when the preferred seat is available for assignment. When the reservation system determines that the preferred seat is available, the reservation system can automatically select the user from the waitlist and automatically assign the preferred seat to the user. The reservation system can also automatically inform the user of the preferred seat assignment.

When the reservation system determines that the user is eligible to be assigned to the preferred seat and the preferred seat is not available for assignment, the reservation system or the user can select an alternative seat on the particular travel conveyance for assignment or may not select anything. The selection of an alternative seat is possible if there are other open seats available (e.g., the seat map is not full, the seat map is not open for assignment). In the case where an alternative seat is available, the reservation system then assigns the selected alternative seat to the user and the reservation system may also place the user on a waitlist for assignment to the requested preferred seat. When the reservation system later determines that the preferred seat is available, the reservation system can automatically select the user from the waitlist, automatically reassign the requested preferred seat to the user, and automatically inform the user of the seat reassignment. In addition, the alternative seat that was previously assigned to the user can be made available for assignment to other passengers, including those passengers currently on the waitlist.

In some implementations, the reservation system can check the waitlist of passengers against available seats for assignment on an event driven basis. For example, an event can be a change in the equipment used for the travel conveyance (e.g., a change to a plane with more seats), an unblocking of seats within the travel conveyance (e.g., fewer seats blocked out for assignment only to platinum elite travel club members), or a change in the sales configuration of the seats on the travel conveyance (e.g., more seats become available for assignment to economy class travelers). In another example, an event can be a timed event where the waitlist is checked regularly at particular time intervals (e.g., every 12 hours). In this example, the time interval can become finer as the travel date and time approaches (e.g., every 12 hours up until one week before the travel date, every six hours up until 48 hours before the travel date, and every hour up until 24 hours before the travel time). In another example, an event can be an on-demand request by an authorized user of the reservation system to check the waitlist of passengers against the currently available seats for assignment. In another example, the event can be the cancellation of a seat assignment by a passenger through any means such as a web interface seat map selection where a passenger removes his seat, a kiosk check-in where a passenger removes his seat and selects another seat, or a travel agency cancelling the seat on behalf of the passenger, and so forth.

In accordance with implementations of the present disclosure, and as discussed in further detail below, a reservation system receives a request from a traveler or a representative for the traveler for a preferred accommodation on a travel conveyance. In addition, the reservation system obtains booking data and profile data for the traveler and operational data for the travel conveyance. The reservation system processes the booking data, the profile data and the operational data based a plurality of criteria to identify available accommodations for possible assignment to the traveler. If the reservation system determines that a requested preferred accommodation is not available for assignment to the traveler, the reservation system can place the request for the preferred accommodation for the traveler on a waitlist. In some implementations, discussed in further detail below, the reservation system assigns an alternative accommodation to the traveler from identified available accommodations. If the preferred accommodation later becomes available, the reservation system can automatically reassign the preferred accommodation to the traveler, freeing up the alternative accommodation for possible assignment by the reservation system to another traveler. In some implementations, discussed in further detail below, the traveler may be placed on a waitlist for the preferred travel accommodation without being assigned to a travel accommodation in the interim. If the preferred accommodation later becomes available, the reservation system can automatically assign the preferred accommodation to the traveler, automatically notifying the traveler of the assignment and any subsequent actions the traveler may need to take in order to secure the assignment. The reservation system can periodically determine accommodation availability on an event driven basis where the events can be based, for example, on time, changes in the equipment type or configuration, additional availability of previously blocked accommodations, cancellations of held seat assignments by other passengers, movement of one or more passengers from one flight to another, use of a fly ahead option by one or more passengers, or changes in the sales and marketing of available accommodations. In addition, an authorized user of the reservation system (e.g., on-demand) may initiate an event.

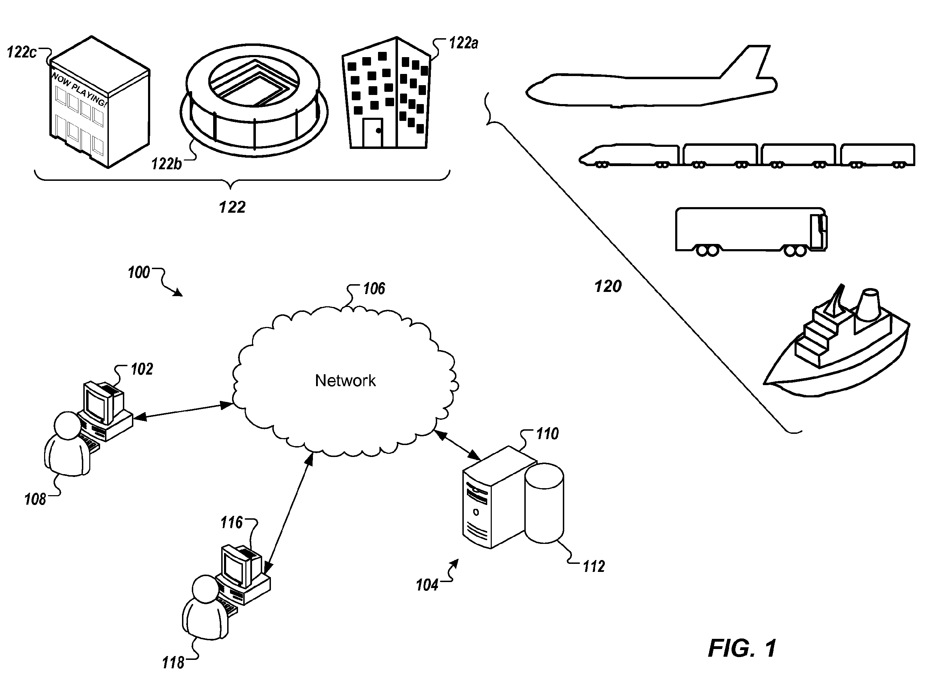

FIG. 1 depicts an example system 100 that can execute implementations of the present disclosure. The example system 100 includes a computing device 102, a computing system 104 and a network 106. The computing device 102 and the computing system 104 can communicate over the network 106. A user 108 can operate the computing device 102. The computing system 104 can include one or more computing devices 110 and one or more computer-readable storage devices 112. Another computing device 116 can be provided and can be operated by a user 118.

In some implementations, the computing devices 102, 116 can be computing devices such as laptop or desktop computers, smartphones, personal digital assistants, portable media players, tablet computers, or other appropriate computing devices that can be used to communicate with an electronic social network. In some implementations, the computing devices 102, 116 perform client-side operations, as discussed in further detail herein. In some implementations, the computing system 104 can include one or more computing devices such as a computer server. In some implementations, the computing system 104 can represent more than one computing device working together to perform the server-side operations, as discussed in further detail herein. In some implementations, the network 106 can be a public communication network (e.g., the Internet, cellular data network, dialup modems over a telephone network) or a private communications network (e.g., private LAN, leased lines).

In some implementations, the example system 100 can be used to book travel during specified dates and request assignment of a preferred travel accommodation on a travel conveyance 120. In some implementations, the example system 100 can be used to book an accommodation in a venue 122 such as a room in a hotel 122a, a seat in a stadium 122b, or a seat in a theater 122c. In some examples, the computing system 104 hosts a travel accommodation assignment system (e.g., a seat assignment engine) that can be used to assign one or more accommodations on the travel conveyance 120 and the venue 122.

For example, the user 108 can be a passenger and can access a travel accommodation assignment interface provided on the computing device 102. In some implementations, the travel accommodation assignment system can be provided as part of a web-based system that provides a travel accommodation assignment interface within a general purpose browser executed on the computing device 102. The user 108 can access information regarding the dates of travel and the travel accommodations available on the travel conveyance. The user 108 can determine whether a preferred travel accommodation is available from among the available travel accommodations.

In some cases, the user 108 can generate a booking for specified dates of travel and, if the preferred travel accommodation is not available for assignment to the user 108, the user 108 can request the preferred travel accommodation assignment using the web-based system. The travel accommodation assignment system can place the request for the preferred travel accommodation for the user 108 on a waitlist maintained by the travel accommodation assignment system. In some cases, the user 108 can select and be assigned to an alternative travel accommodation that is available from among the currently available travel accommodations before completion of the booking.

In other cases, the user 108 may choose to forgo assignment to an alternative travel accommodation before completion of the booking, or there is no accommodation available for assignment. In these cases, the user 108 has booked travel for the specified dates on the travel accommodation but will not yet have an assigned travel accommodation. In other cases, the user 108 may choose not to complete the booking but to remain on the waitlist for their preferred travel accommodation assignment for travel on the travel conveyance during the times specified by the booking. In all of the above recited cases, if the preferred travel accommodation that the user 108 is being waitlisted for later becomes available, the travel accommodation assignment system can automatically assign the preferred accommodation to the traveler, automatically notifying the traveler of the assignment and any subsequent actions the traveler may need to take in order to secure the assignment (e.g., complete the booking).

In some implementations, the travel accommodation assignment system can determine travel accommodation availability based on an occurrence of an event (e.g., changes in the equipment type or configuration, additional availability of previously blocked accommodations, or changes in the sales and marketing of available accommodations, or cancellation by a passenger of a previously held seat assignment). In some implementations, the travel accommodation assignment system can periodically determine travel accommodation availability based on time (e.g., every 24 hours). In some implementations, an authorized user of a reservation system (e.g., on-demand) that interfaces with the travel accommodation assignment system may initiate an event.

In some examples, the user 118 can be an agent and can access a travel accommodation assignment interface provided on the computing device 116. In some examples, the agent can be an independent agent (e.g., a travel agent). In some examples, the agent can be an employee of a travel service provider (e.g., an airline). In some implementations, the travel accommodation assignment system can be part of a web-based system that provides a travel accommodation assignment interface within a general purpose browser or a specific browser executed on the computing device 116. The user 118 can access information regarding a potential passenger, the dates of travel, a preferred travel accommodation for the potential passenger, and the travel accommodations available on the travel conveyance. The user 118 can determine whether the preferred travel accommodation for the potential passenger is available from among the available travel accommodations. The user 118 can generate a booking and/or assign travel accommodations using the web-based system. In some cases, if the user 118 determines that the preferred travel accommodation for the potential passenger is not available for assignment to the passenger, the user 118 can request the preferred travel accommodation assignment for the passenger using the web-based system. For example, the user 118 can have the travel accommodation assignment system place the request for the preferred travel accommodation for the passenger on a waitlist that is maintained by the travel accommodation assignment system. In addition, the user 118 may assign the passenger an alternative travel accommodation that is available from among the currently available travel accommodations.

The travel associated with a booking can include a journey that can be made up of one or more segments. In some examples, the journey can include a single segment (e.g., a flight departing from a first airport and arriving at a second airport). In some examples, the journey can include multiple segments (e.g., a first flight departing from a first airport and arriving at a second airport, and a second flight departing the second airport and arriving at a third airport). In some implementations, the passenger can request a preferred travel accommodation for each travel segment. In some cases, if the preferred travel accommodation is not available for assignment to the passenger for all travel segments, the passenger can be placed on a waitlist for their preferred travel accommodation for each travel segment. For example, if the preferred travel accommodation is available for a first travel segment but not for a second travel segment, the passenger can be assigned to the preferred travel accommodation for the first travel segment and can be placed on a waitlist for the preferred travel accommodation for the second travel segment. In the meantime, the passenger can be assigned an alternative travel accommodation for the second travel segment.

In some implementations, a booking can be associated with a record that can include one or more individuals. In some examples, the booking includes a single person. In some examples, the booking includes multiple individuals. In some cases, the multiple individuals included in a booking may request to be assigned accommodations proximate to one another (e.g., adjacent seats on a travel conveyance, adjacent rooms in a hotel, and adjacent seats in a theater). In some implementations, the record is a passenger name record (PNR) that can include one or more passengers. In some cases, each of the individuals included in a record may not be assigned their respective preferred accommodation at the time of the booking.

In an example case, a booking for seats on a travel conveyance can be associated with a PNR that includes four passengers. In one example, the fourth passenger may not be assigned a seat proximate to the other three passengers in the PNR. The travel accommodation assignment system can place the fourth passenger's request for a preferred seat proximate to the assigned seats for the other three passengers included in the PNR on a waitlist. In another example, the third passenger included in the PNR may be assigned a seat proximate to the other passengers included in the PNR but may request a preferred seat type, different from their currently assigned seat type, that is also proximate to the other passengers (e.g., the third passenger is currently assigned to a center seat in a row of the travel conveyance and would prefer to be assigned an aisle seat). The travel accommodation assignment system can place the third passenger's request for the preferred seat type on the travel conveyance and proximate to the assigned seats for the other three passengers included in the PNR on a waitlist. In another example, a second passenger included in the PNR may be assigned a seat located away from the other three passengers included in the PNR and in an undesirable seat type of the travel conveyance. In this example, the travel accommodation assignment system can place a request for a preferred seat type on the travel conveyance that is proximate to the three other passengers included in the PNR (e.g., an aisle seat located near the assigned seats for the other three passengers in the PNR) on a waitlist. In this case, the booking can provide the travel accommodation assignment system an indication of whether it is more important for the second passenger to be assigned a seat as close as possible to the other passengers in the PNR or to be assigned the preferred seat type.

The occurrence of a travel accommodation assignment system event causes the travel accommodation assignment system to review the waitlist for the potential assignment or reassignment of preferred requested seats for passengers on the waitlist (e.g., a seat waitlist clearance). The event can occur based on a system event (e.g., a seat available potential event), a timed event, or on-demand.

Unblocking of seats in a seat assignment schedule, release of a seat block on a seat map, or cancellation of one or more seats in a PNR (e.g., one or more passengers cancel a reservation, one or more passengers give up their seat and are assigned to another seat) can be system events. For example, twenty-four hours prior to travel a travel conveyance provider may release a block of seats from being "held back" for airport assignment to being available for assignment. In some implementations, before a block of seats is released to the general traveling public, the travel accommodation assignment system can review the waitlist for the potential assignment or reassignment of preferred requested seats for passengers on the waitlist, running a waitlist clearance.

Other system events can include, but are not limited to: a change in the physical configuration of the travel conveyance (e.g., the travel conveyance has more seats in economy seating, a car is added onto a train); a marketing configuration change for the travel conveyance (e.g., economy comfort seats are now part of the general economy seat group); a sales configuration change for the travel conveyance (e.g., seats that required an additional charge when assigned (e.g., preferred seats) no longer require the charge and are now part of the general economy seating group); and an equipment swap for the travel conveyance (e.g., a larger travel conveyance is swapped in opening up more seats).

An irregular operation (IROP) event occurs when a travel conveyance fails for any reason to operate on schedule, is canceled, or has a change of equipment which cannot accommodate all confirmed passengers who present themselves for check-in.

A re-accommodation event can affect the departure time of a flight, or the rescheduling of a flight entirely, requiring some passengers on the flight to reserve seats on other flights. For this event, a passenger's waitlist request for a preferred seat can be retained and applied to the new flight.

Timed events can be events that occur regularly at particular time intervals where travel conveyance providers may allow more and more seat groups to be made available to a wider range of eligible passengers. Example timed events can occur once every five days up to two weeks before departure, once every eight hours up to forty-eight hours before departure, and once every fifteen minutes up until twenty-four hours before departure time.

An authorized user of a travel accommodation assignment system can generate an on-demand event where the travel accommodation assignment system can review the waitlist for potential assignment or reassignment of preferred requested seats for passengers on the waitlist, effectively running a seat waitlist clearance. For example, an on-demand event can occur before seats are assigned to other passengers. This allows the travel conveyance provider to reassign more desirable seats to passengers on the waitlist in a priority order before assigning seats to other passengers without assigned seats who are not on the waitlist. In another example, an on-demand event can occur after seats are assigned to other passengers. In this case, the waitlist may include additional passengers for potential assignment or reassignment of preferred requested seats for passengers on the waitlist when the travel accommodation assignment system runs a waitlist clearance.

In some implementations, the travel accommodation assignment system can determine if a passenger included on the waitlist can be reassigned to a requested preferred seat based on the availability of the seat for assignment to the passenger (e.g., the seat is unassigned, the seat is part of a seat group the passenger is eligible for seating in) and based on the passenger's ranking on the waitlist. The travel accommodation assignment system can provide and maintain a hierarchically organized waitlist. For example, passengers on a waitlist may be ranked on the waitlist based on when the waitlist request occurred, or based on their customer value score to the carrier, or based on the type of fare they purchased. The travel accommodation assignment system can review the ranked waitlist starting with the oldest entry and ending with the most recent entry when determining if an available seat matches the request for the same seat. In another example, booking passengers in a multiple PNR requesting contiguous seats for the passengers in the PNR may be ranked higher than a single passenger requesting a preferred seat. In another example, a passenger who is a platinum elite travel club member may be placed higher on the waitlist than a passenger who is a silver travel club member.

In some cases, certain reconfigurations or events can affect a passenger's position on the waitlist. For example, if a passenger upgrades their travel club membership while on the waitlist they may be ranked higher on the waitlist. If while on the waitlist, the passenger's customer value score decreases they may be placed at a lower position on the waitlist.

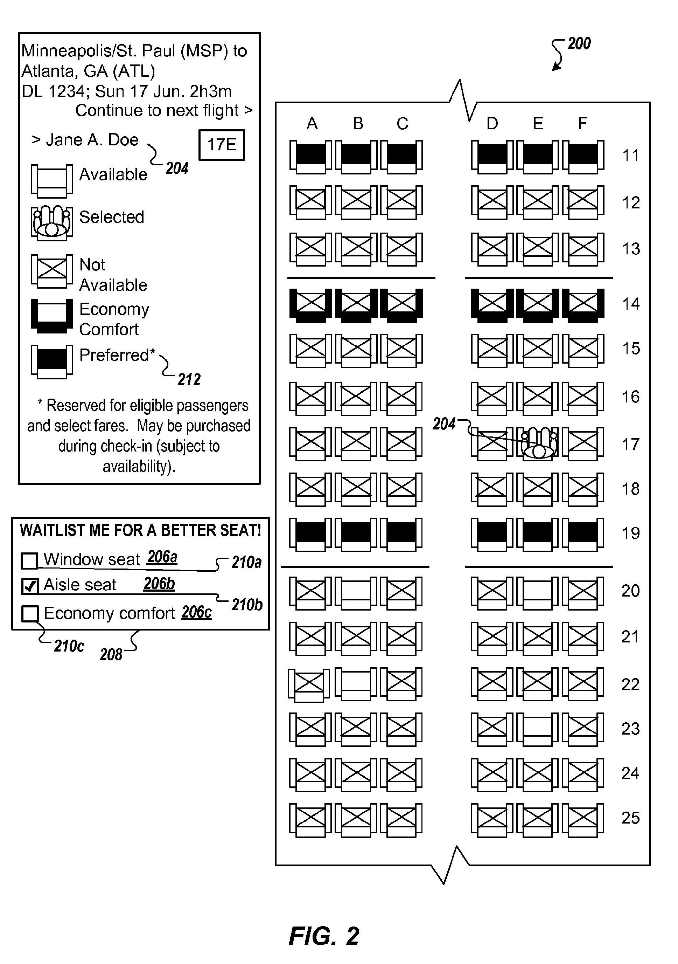

FIG. 2 is a diagram of an example seating plan 200 for a travel conveyance that includes waitlist selections 206a-c for a passenger 204 (Jane Doe). In this example, the passenger 204 is not assigned to a seat that matches their preferred seat assignment criterion (e.g., an aisle seat) as a seat that matches their criterion is not currently available for assignment to the passenger 204 on the travel conveyance. In the meantime, the passenger 204 is assigned to seat 17E, a center seat. Advisory 208 indicates to the passenger 204 that they can choose to be waitlisted for a seat that matches one of a criterion (e.g., a seat group type) indicated by the waitlist selections 206a-c (e.g., a window seat, an aisle seat, or an economy comfort seat).

In this example, the criterion for each of the waitlist selections 206a-c represents the types of seats (e.g., a window seat, an aisle seat, or an economy comfort seat (e.g., more legroom), respectively) that the passenger 204 can request for assignment. The types of seats available to a passenger for assignment and for wait listing can be based on the seat groups a passenger is eligible for assignment to. For example, a passenger who is not a travel club member may be waitlisted for window and aisle seats only, while a passenger who is a travel club member may be waitlisted for economy comfort seats in addition to window and aisle seats.

The passenger 204 activates a waitlist selection checkbox 210b included in the advisory 208 in order to be placed on a waitlist for reassignment to an aisle seat on the travel conveyance. If an aisle seat becomes available, the passenger 204 will be automatically reassigned to the aisle seat and automatically notified of the seat reassignment. In some cases, the passenger 204 may not be assigned to or may choose not to be assigned to an alternative seat (e.g., seat 17E) when it is determined that a request for assignment to a seat that matches their preferred seating criterion cannot be fulfilled. In these cases, an advisory similar to the advisory 208 can be displayed to the passenger 204 allowing the passenger 204 to activate a waitlist select checkbox to select their preferred accommodation for wait listing.

Though, in this example, the passenger 204 activated waitlist selection checkbox 210b in order to be waitlisted for a seat that matches their preferred seat assignment criterion (e.g., an aisle seat), in other examples, the passenger 204 can activate a different checkbox in order to be waitlisted for a seat assignment from a different seat category. Though the seat group type indicated by the waitlist selections 206a, 206c may not match the preferred seat group type criterion for the passenger 204, if the passenger 204 is eligible for a seat assignment in one of the seat groups the passenger 204 can be placed on a waitlist for an available seat in that particular seat group. As shown in the example of FIG. 2, though the example seating plan 200 for the travel conveyance includes available preferred seats 212, the passenger 204 is not eligible for a seat assignment in that particular seat group as indicated in the advisory 208.

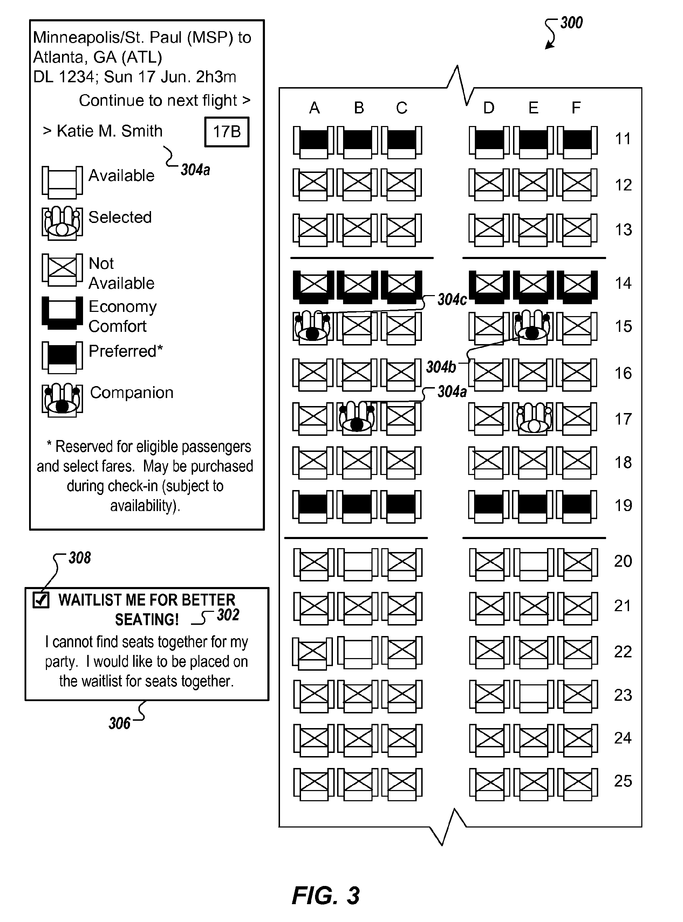

FIG. 3 is a diagram of an example seating plan 300 for a travel conveyance that includes a waitlist selection 302 for a group of passengers 304a-c included in a PNR for passenger 304a (the booking passenger). In this example, the passengers 304a-c are not assigned to seats that match a preferred seat assignment criterion indicated in the PNR (e.g., contiguous seats) as seats that match this criterion are not available for assignment to the passengers 304a-c on the travel conveyance. In the meantime, passengers 304a-c are assigned to alternative available seats that allow them to sit as close as possible. Advisory 306 indicates to the passenger 304a that they can choose to be waitlisted for contiguous seats for their party (passengers 304a-c). Passenger 304a activates a waitlist selection checkbox 308 in order for the passengers 304a-c to be placed on a waitlist for reassignment to contiguous seats on the travel conveyance.

In some cases, the passenger 304a may elect not to have alternative seats assigned to the passengers 304a-c in their party when it is determined that a request for assignment to contiguous seats cannot be fulfilled. In these cases, an advisory similar to the advisory 306 can be displayed to the passenger 304a allowing the passenger 304a to activate a waitlist select checkbox in order for the passengers 304a-c to be placed on a waitlist for contiguous seat assignments.

In some implementations, a travel accommodation assignment system can provide additional criteria when determining the availability of contiguous seat assignments for a group of passengers. For example, the travel accommodation assignment system may seat one or more passengers in the group of passengers by themselves if the overall togetherness of the seat assignments is better for the majority of the passengers in the group. In another example, the travel accommodation assignment system may not allow any of the passengers in the group of passengers to be seated alone.

In some implementations, one or more passengers in a group of passengers may also be individually waitlisted for a preferred seat assignment that matches additional seat assignment criteria for the individual passenger. For example, referring to FIG. 3, passenger 304a prefers sitting in an aisle seat, and passengers 304b and 304c prefer sitting in window seats. The travel accommodation assignment system can additionally waitlist passenger 304a for an aisle seat and passenger 304b for a window seat. In some implementations, when the travel accommodation assignment system determines if the passengers 304a-c included on the waitlist can be reassigned to other seats, the travel accommodation assignment system will first attempt to seat the passengers 304a-c contiguously before attempting to accommodate the individual preferred seat assignment requests for passengers 304a and 304b.

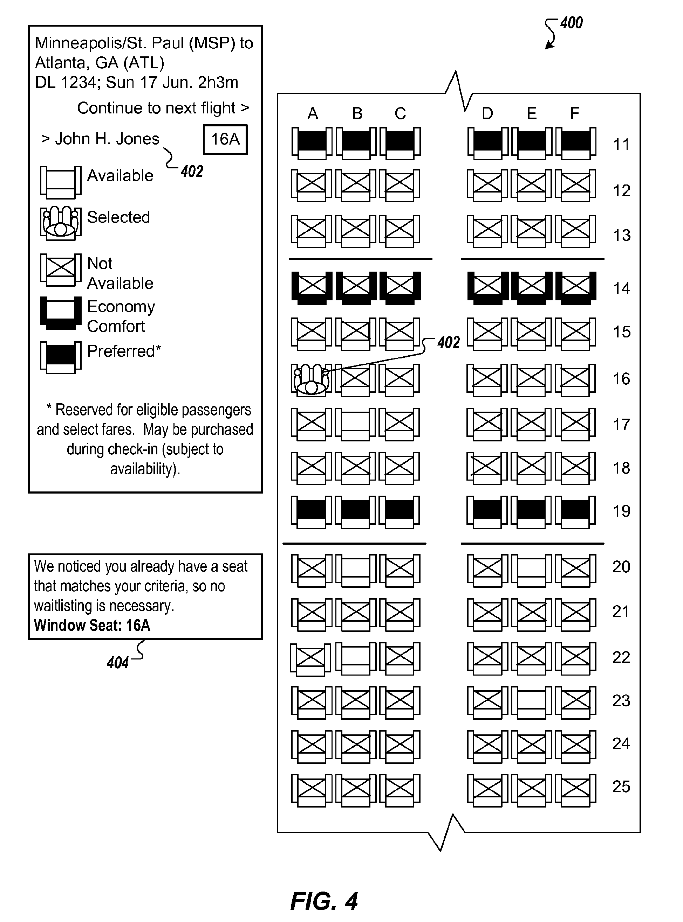

FIG. 4 is a diagram of an example seating plan 400 for a travel conveyance that includes an advisory 404 that indicates a passenger 402 has a preferred assigned seat and is not being waitlisted for another seat assignment. In this example, the passenger 402 is assigned to a seat that matches her preferred seat criterion (e.g., a window seat) as the seat that matches her criterion is currently available for assignment to the passenger 402 on the travel conveyance. In this example, the passenger 402 will not be placed on a waitlist for another seat assignment. In some cases, the passenger 402 can select the seat based on their preferences (e.g., the passenger 402 prefers to sit in a window seat). In other cases, a travel accommodation assignment system can assign the preferred seat to the passenger 402 based on the preferred criterion for the passenger 402 and the current availability of a seat in the preferred seat group. Similarly, when the PNR includes multiple passengers, if all of the passengers in the PNR can be seated together, the travel accommodation assignment system can assign the contiguous seats to the passengers in the PNR and advise the booking passenger that all of the passengers in the PNR are seated contiguously.

In some implementations, the waitlist can include a single entry for the booking passenger in a multiple passenger PNR. In other implementations, the waitlist may include multiple entries for a multiple passenger PNR. In these cases, each entry can include a group of passengers from the multiple passenger PNR. For example, if there are four passengers in a PNR, where the booking passenger (passenger 1) prefers an aisle seat and passenger 3 prefers a window seat, a first group of passengers on the waitlist may be passenger 1 and passenger 2, and a second group on the waitlist may be passenger 3 and passenger 4. Grouping passengers in a multiple passenger PNR can allow for preferred seating for individual passengers included in the PNR along with the contiguous seating for all of the passengers in the PNR.

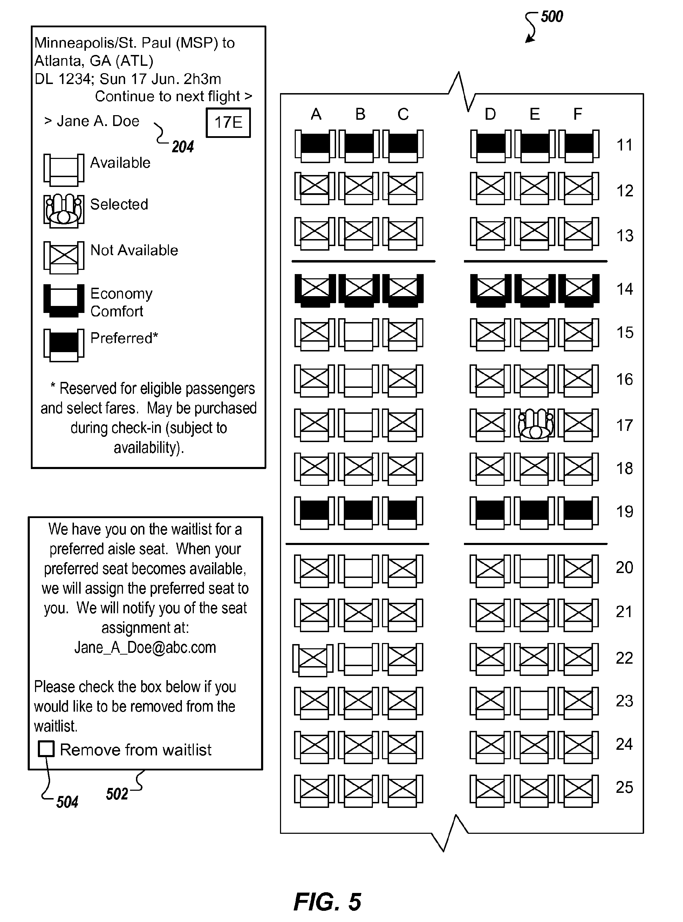

FIG. 5 is a diagram of an example seating plan 500 for a travel conveyance that includes an advisory 502 that indicates a passenger 204 is waitlisted for a requested preferred seat. Referring to FIG. 5 and FIG. 2, advisory 502 indicates that the passenger 204 is on a waitlist for a preferred seat. The seating plan 500 shows the passenger 204 in their currently assigned seat, seat 17E. The passenger 204 may see the seating plan 500 and advisory 502 when accessing their booking.

A passenger can elect to be removed from the waitlist. For example, passenger 204 can activate the checkbox 504 and they will be removed from the waitlist, maintaining their current seat assignment. In cases where the passenger is waitlisted for preferred seating for a multiple passenger PNR, if the passenger chooses to be removed from the waitlist, all of the passengers in the PNR will be removed from the waitlist and will remain in their currently assigned seats. If a passenger who has not yet been assigned a seat chooses to be removed from the waitlist, the passenger can select an alternative available seat for assignment. Alternatively, the travel accommodation assignment system may assign a seat to the passenger when the passenger is removed from the waitlist or at a later time if, when the passenger is removed from the waitlist, there are no available seats for assignment. Similarly, if one or more of the passengers in a multiple passenger PNR do not have an assigned seat when the booking passenger chooses to be removed from the waitlist, the booking passenger can select alternative seats for assignment to the one or more passengers. Alternatively, the travel accommodation assignment system may assign seats to the one or more passengers when the booking passenger is removed from the waitlist or at a later time if, when the booking passenger is removed from the waitlist, there are no available seats for assignment.

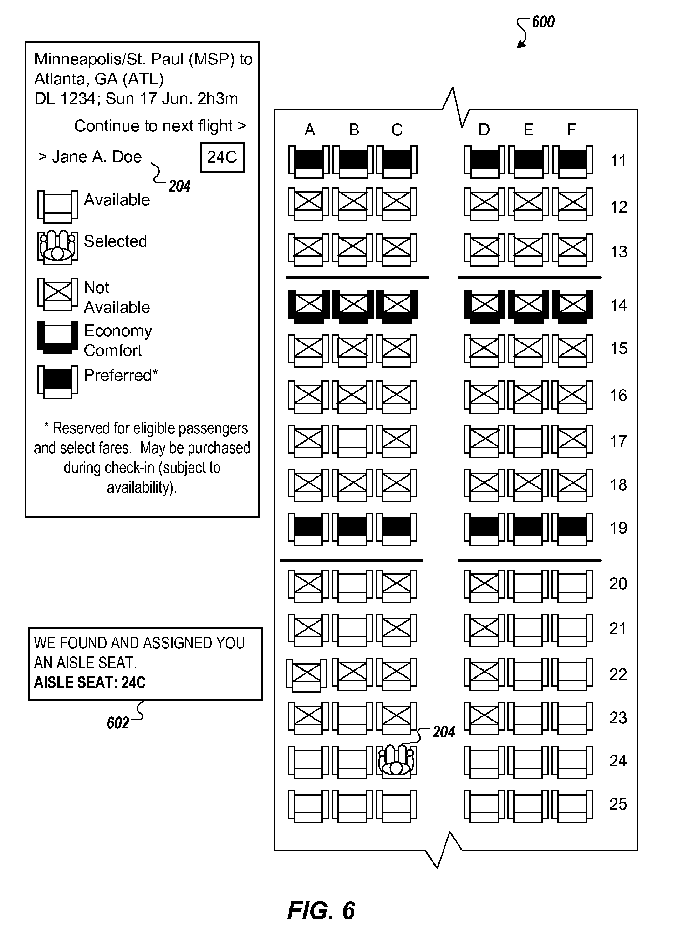

FIG. 6 is a diagram of an example seating plan 600 for a travel conveyance that includes an advisory 602 that indicates a passenger 204 has been assigned a preferred seat. For example, referring to FIG. 6 and FIG. 2, the occurrence of an event (e.g., a group of seats on the travel conveyance are unblocked) triggers a travel accommodation assignment system to determine available seats for assignment on the travel conveyance and to then check the waitlist to determine if the waitlist includes a preferred seat request for a passenger for a seat assignment to one of the available seats. If a match occurs (the preferred seat request found on the waitlist matches an available seat), the travel accommodation assignment system automatically assign the available seat to the passenger being processed and the passenger will be removed from the waitlist. In the example of FIG. 2 and FIG. 6, the travel accommodation assignment system determines that passenger 204 is waitlisted for an aisle seat. The travel accommodation assignment system determines that aisle seats 24C, 24D, 25C, and 25D are available seats in a seat group that passenger 204 is eligible for seat assignments in. The travel accommodation assignment system automatically reassigns the passenger 204 to seat 24C, freeing up seat 17E. In addition, the travel accommodation assignment system automatically notifies the passenger 204 of the reassignment of the seat. The preferred seat request for the passenger 204 is removed from the waitlist. In the example of FIG. 6, though aisle seat 13C is available and passenger 204 is eligible to be seated in an economy comfort seat, as shown in FIG. 2, the passenger requested to be waitlisted for an aisle seat and not for an economy comfort seat.

In some cases, the travel accommodation assignment system continues to determine available seats for assignment and to check the waitlist to determine if another passenger is waitlisted and eligible for a seat assignment to one of the available seats. If a match occurs, the travel accommodation assignment system automatically assigns the requested preferred seat the passenger is waitlisted for to the passenger, which can result in the freeing up of another seat. The travel accommodation assignment system can continue to determine available seats for assignment and can continue to check the waitlist to determine if a passenger is waitlisted and eligible for a seat assignment to one of the available seats until either no seats are available for assignment or there are no passengers on the waitlist requesting any of the available seats.

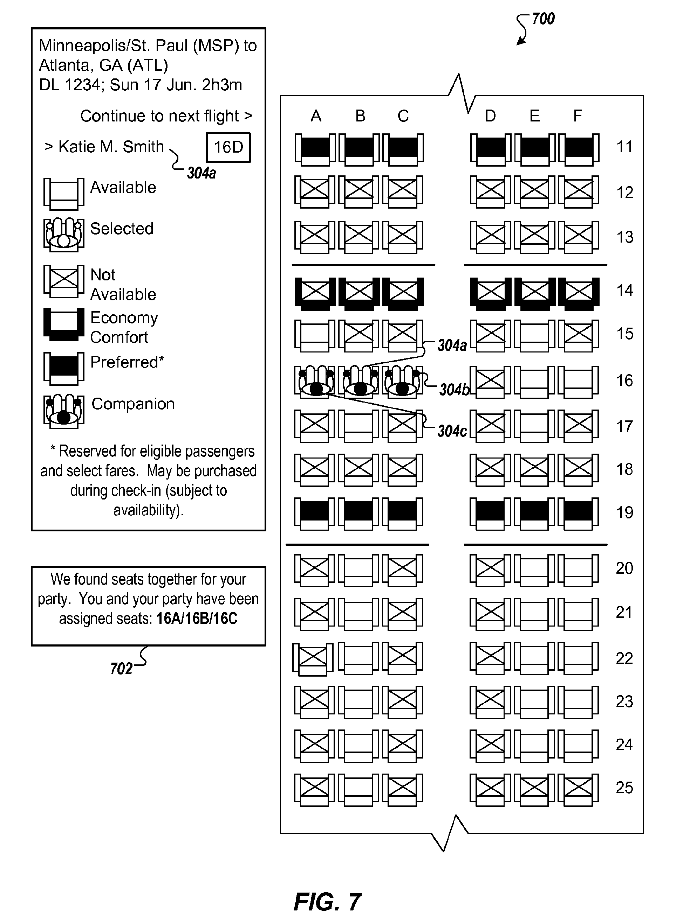

FIG. 7 is a diagram of an example seating plan 700 for a travel conveyance that includes an advisory 702 that indicates a passenger has been assigned their requested preferred seating for their party. For example, referring to FIG. 7 and FIG. 3, the occurrence of an event (e.g., it is one week before the scheduled travel date) triggers a travel accommodation assignment system to determine available seats for assignment on the travel conveyance and to then check the waitlist to determine if the waitlist includes a preferred seating request for a booking passenger for contiguous seats for all of the passengers in a PNR. If the travel accommodation assignment system can provide better contiguous seating for the passengers 304a-c in the PNR for passenger 304a (the booking passenger), the travel accommodation assignment system automatically reassigns the seats for the passengers 304a-c included in the PNR for the waitlisted passenger 304a to more contiguous seats. In the example of FIG. 3 and FIG. 7, the travel accommodation assignment system determines that passenger 304a is waitlisted for better contiguous seating for the passengers in the PNR (passengers 304a-c). The travel accommodation assignment system determines that seats 16A-C are available contiguous seats in a seat group that passengers 304a-c are eligible for seat assignments in. The travel accommodation assignment system automatically reassigns passenger 304a to seat 16B, passenger 304b to seat 16C, and passenger 304c to seat 16A, freeing up seats 17B, 15E, and 15A. In addition, the travel accommodation assignment system automatically notifies the passenger 304a of the reassignment of seats for the passengers 304a-c. The preferred seating request for the passenger 304a is removed from the waitlist.

In some cases, the travel accommodation assignment system continues to determine available seats for assignment and to check the waitlist to determine if another passenger is waitlisted and eligible for seat assignments to any of the available seats. For example, the travel accommodation assignment system determines that a booking passenger for a PNR that includes four passengers is waitlisted for contiguous seating for all of the passengers in the PNR. In this example, the four passengers in the PNR do not currently have any assigned seats. The travel accommodation assignment system automatically determines that seats 20E, 20F, 21 E, and 21 F are available contiguous seats in a seat group that the four passengers in the PNR are eligible for seat assignments in. The travel accommodation assignment system automatically assigns the passengers to seats 20E, 20F, 21 E, and 21 F. In addition, the travel accommodation assignment system automatically notifies the booking passenger of the assignment of seats for the passengers in the PNR. The preferred seating request for the booking passenger is removed from the waitlist.

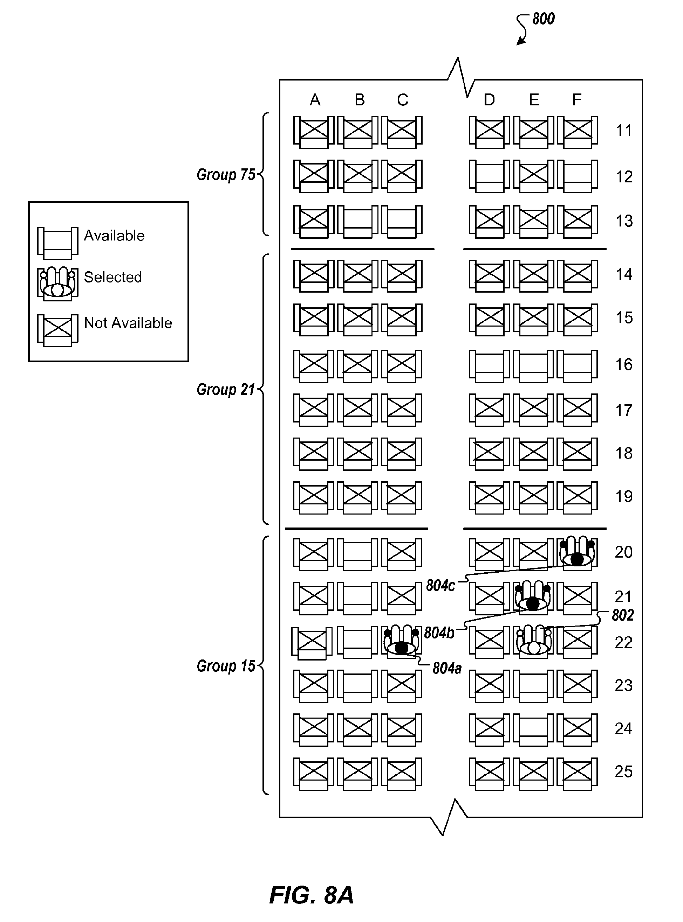

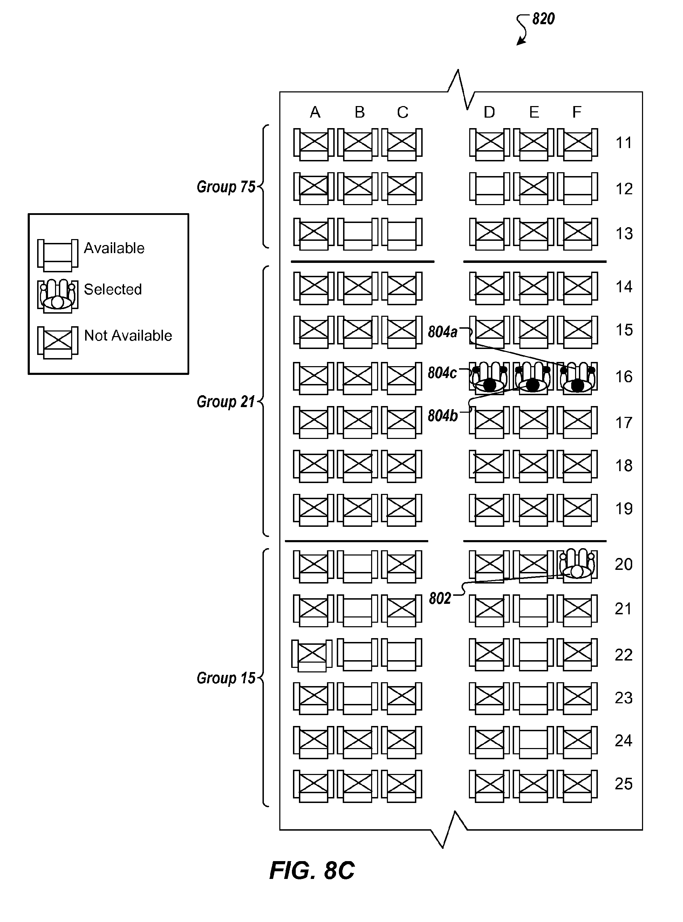

FIGs. 8A-C are diagrams of example seating plans 800, 810, and 820, respectively, for a travel conveyance that show assigned and requested seats for a plurality of passengers included on a waitlist.

For example, a travel accommodation assignment system event occurs (e.g., one or more passengers cancelled reservations resulting in the availability of their previously assigned seats). The travel accommodation assignment system performs a seat waitlist clearance, checking the available seats on a travel conveyance for a particular travel date against seat requests for passengers on a waitlist for the travel conveyance for the particular travel date.

Referring to FIG. 8A, John Smith, passenger 802, is assigned center seat 22E and is waitlisted for a window seat. The travel accommodation assignment system determines that passenger 802 qualifies for seating in the seat groups with available seats (e.g., seat groups 15, 21, and 75 as shown in FIG. 8A). Mary, Bill, and Jim Anderson (the Anderson party), passengers 804a-c, respectively, are waitlisted for contiguous seating. The PNR for the booking passenger, passenger 804a, includes the multiple passengers 804a-c. Passenger 804a is waitlisted for contiguous seats for the Anderson party.

The travel accommodation assignment system can access a set of rules for evaluating the requests for the waitlisted passengers. One or more criteria may be used to rank the passengers on the waitlist. In some implementations, a multi-party criterion specifies that requests for contiguous preferred seating for multiple passengers in a PNR for a waitlisted passenger can be evaluated against the available seats before preferred seating requests for single waitlisted passengers are evaluated against the available seats.

In some implementations, one or more of the following criteria may also be used in the ranking of waitlisted passengers that include, but are not limited to: a customer profile, loyalty club membership, loyalty club tier, loyalty club account information, contact information, preferences, corporate or government affiliation, ancillary activity, flight history, customer recognition score, profile comments, customer valuation, ancillary revenue, corporate affiliation, booking class, fare paid, market, and codeshare affiliation. The travel accommodation assignment system evaluates and prioritizes passengers on the waitlist based on one or more of the criteria. In some implementations, each passenger on the waitlist may be assigned a priority score based on the determined ranking of the passenger in the waitlist (e.g., higher ranking passengers receive larger scores than lower ranking passengers).

The travel accommodation assignment system then determines if the requested preferred seats are available for assignment to passengers on the waitlist based on their ranking in the waitlist. As each passenger is evaluated for possible seat reassignments, if the travel accommodation assignment system determines that the requested preferred seat for a waitlisted passenger is available for assignment to the passenger, the travel accommodation assignment system can assign the seat to the passenger. In cases where the passenger had already been assigned a seat, the travel accommodation assignment system will reassign the passenger's seat making the passenger's previously assigned seat available for possible assignment to other passengers on the waitlist. The travel accommodation assignment system continues to determine if the requested preferred seats are available for assignment to passengers on the waitlist based on their ranking in the waitlist.

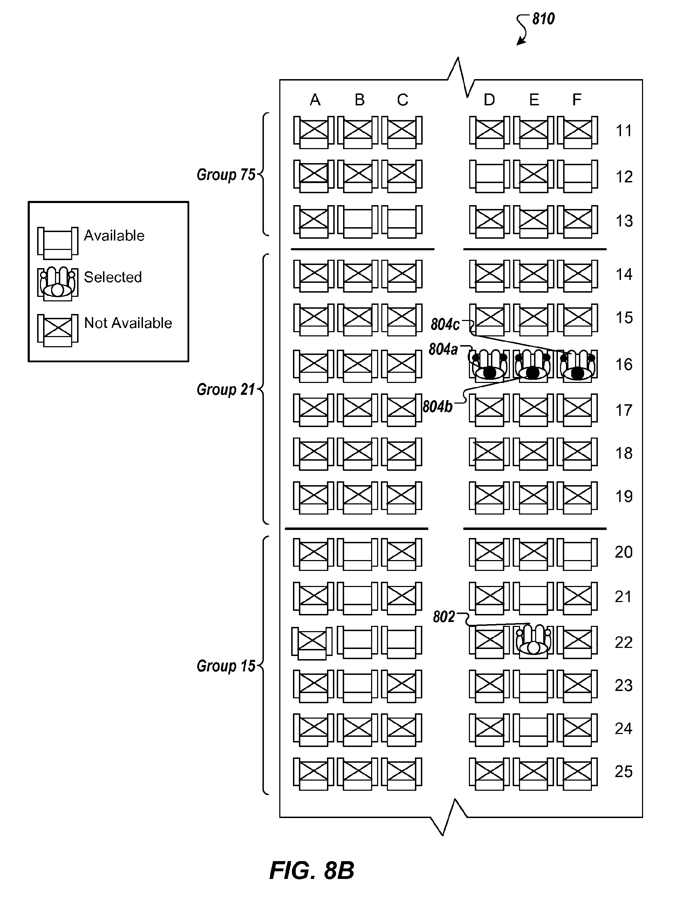

In the example shown in FIGs. 8A-C, referring to FIG. 8B, the travel accommodation assignment system uses a multi-party criterion that specifies requests for contiguous preferred seating for multiple passengers in a PNR for a waitlisted passenger are evaluated against the available seats before preferred seating requests for single waitlisted passengers are evaluated against the available seats. In this example, the booking passenger (passenger 804a) waitlisted for contiguous seats for the Anderson party and is given a higher score and therefore a higher ranking in the waitlist than passenger 802 who is waitlisted for a requested preferred seat. Passengers 804a-c are automatically assigned seats 16D, 16E, and 16F, respectively. Passenger 804a releases seats 22A, 21 E, and 20F. The travel accommodation assignment system includes seats 22A, 21 E, and 20F in the group of available seats, removes seats 16D, 16E, and 16F from the group of available seats, and removes passenger 804a from the waitlist. The travel accommodation assignment system can automatically notify the passenger 804a of the seat reassignments. The travel accommodation assignment system continues to determine if requested preferred seats are available for assignment to passengers on the waitlist based on their ranking in the waitlist.

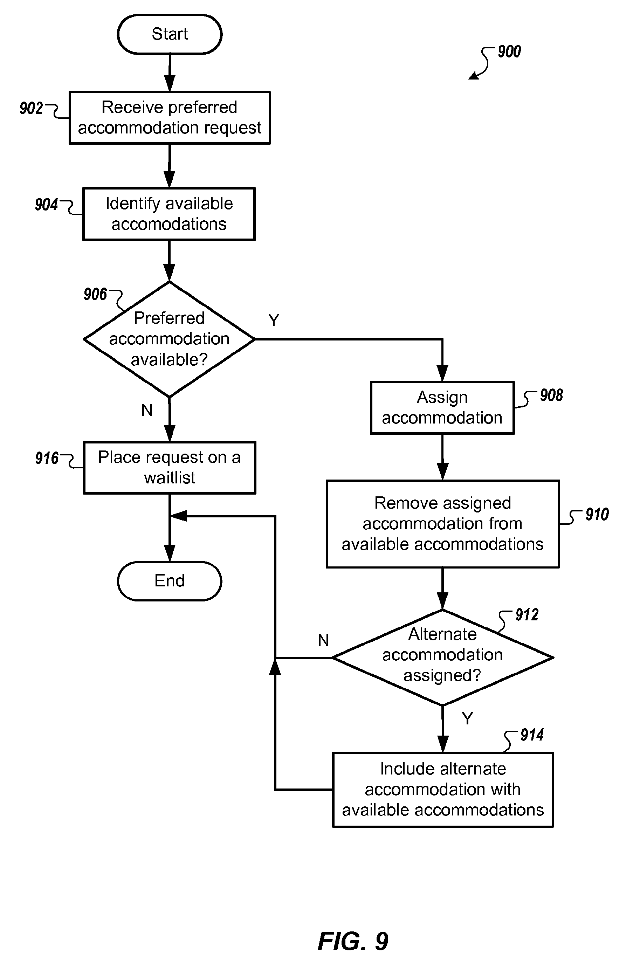

For example, the travel accommodation assignment system determines that passenger 802 is at the top of the ranked waitlist and is waitlisted for a window seat. Referring to FIG. 9C , passenger 804c released seat 20F, a window seat. The travel accommodation assignment system assigns passenger 802 to seat 20F, releases seat 22E, includes seat 22E in the group of available seats, removes seat 20F from the group of available seats, and removes passenger 802 from the waitlist. The travel accommodation assignment system can automatically notify the passenger 802 of the seat reassignments. The travel accommodation assignment system continues to determine if requested preferred seats are available for assignment to passengers on the waitlist based on their ranking in the waitlist until there are no longer any available seats or until the waitlist is cleared of all passengers.

In some implementations, the travel accommodation assignment system may not specify the use of the multi-party criterion when evaluating preferred seat requests for waitlisted passengers against the available seats. For example, in these implementations, passenger 802 may be ranked higher on the waitlist than passenger 804a based on the use of other criteria for ranking passengers on the waitlist (e.g., passenger 802 is a platinum elite travel club member and passenger 804a is a silver travel club member). In this example, referring to FIG. 8A, passenger 802 is automatically reassigned to seat 16F (their requested preferred seat, a window seat), releasing seat 21 E. Seat 16E is included in the group of available seats and the travel accommodation assignment system continues to determine if requested preferred seats are available for assignment to passengers on the waitlist based on their ranking in the waitlist. If passenger 804a is next on the waitlist, passenger 804a can be reassigned to seat 22E as the reassignment improves the contiguity of the assigned seats for the passengers 804a-c in the PNR for passenger 804a.

FIG. 9 depicts an example process 900 for determining whether a requested preferred seat is available for assignment to a passenger. In some examples, the process 900 can be implemented using one or more computer program applications executed using one or more computing devices. For purposes of illustration, a non-limiting example context is provided that is directed to a travel accommodation including a unit as a seat on a travel conveyance where contiguous units can form a seat set and a row.

A preferred accommodation request is received (902). The preferred accommodation request can be from a booking passenger for a PNR that includes multiple passengers, requesting preferred seat assignments for each passenger identified in the PNR. The preferred accommodation request can be from a single passenger requesting a preferred seat assignment. Available accommodations are identified (904). A travel accommodation assignment system can identify a group of available seats for possible assignment to qualified passengers. It is determined whether the requested preferred accommodation is available for assignment to a qualified passenger (906). The travel accommodation assignment system can determine if a window seat is available for assignment to a passenger that has requested preferred seating in a window seat. If the requested preferred accommodation is available for assignment to the qualified passenger, the accommodation is assigned to the passenger (908). The assigned accommodation is removed from the available accommodations (910). If it is determined that an alternate accommodation was not previously assigned (912), the process 900 ends. If it is determined that an alternate accommodation was previously assigned (912), the alternate accommodation is included with the available accommodations (914), and the process 900 ends. If the passenger was previously assigned a center seat and has been reassigned to a window seat, the previously assigned center seat can be included in the seats available for possible assignment to other passengers.

If it is determined that the requested preferred accommodation is not available for assignment to the qualified passenger (906), the request for the preferred accommodation for the passenger is placed on a waitlist (916), and the process 900 ends. If a passenger requests a window seat and there are no window seats available for assignment to the passenger, the request for a window seat for the passenger can be placed on a waitlist.

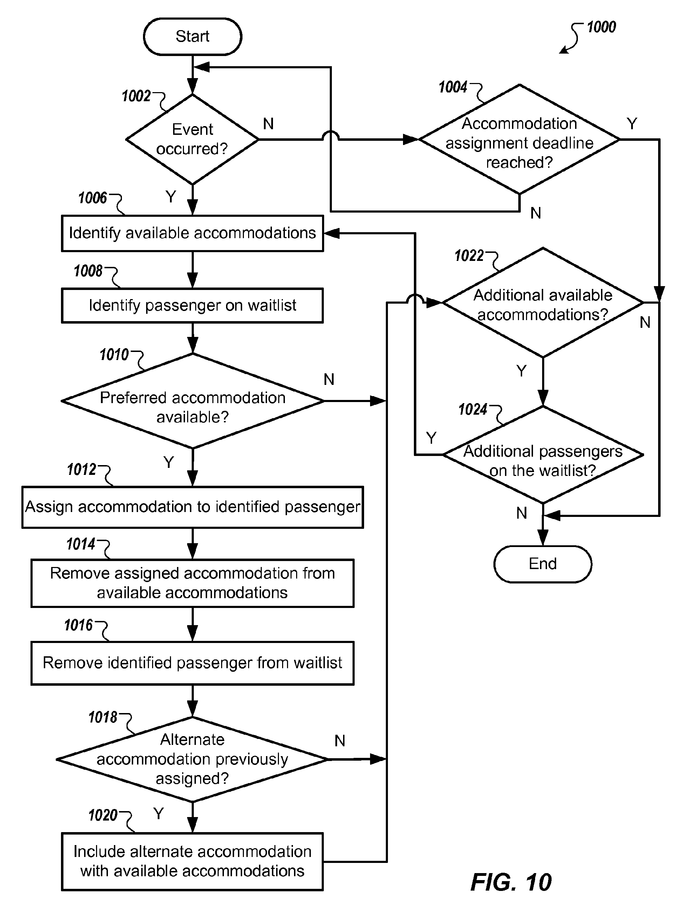

FIG. 10 depicts an example process 1000 for determining whether a requested preferred seat that a passenger is waitlisted for is available for assignment to the passenger. In some examples, the process 1000 can be implemented using one or more computer program applications executed using one or more computing devices. For purposes of illustration, a non-limiting example context is provided that is directed to a travel accommodation including a unit as a seat on a travel conveyance where contiguous units can form a seat set and a row.

The process 1000 begins by determining whether an event occurred (1002). A travel accommodation assignment system can determine that an event occurred (e.g., there was an equipment type change, it is 24 hours before the travel departure time, an authorized user of the travel accommodation assignment system triggered an on-demand event). The travel accommodation assignment system performs a seat waitlist clearance, checking the available seats on a travel conveyance for a particular travel date against seat requests for passengers on a waitlist for the travel conveyance for the particular travel date.

If it is determined that an event did not occur (1002), it is determined whether an accommodation assignment deadline has been reached (1004). If a deadline for assignment of an accommodation has been reached (e.g., the travel conveyance is scheduled for departure in two hours), the process 1000 ends. If it is determined that a deadline for assignment of an accommodation has not been reached, the process 1000 continues to determine if an event occurred (1002).

If it is determined that an event did occur (e.g., it is 24 hours before departure time), available accommodations for possible assignment to passengers on a waitlist are identified (1006). A passenger on the waitlist is identified (1008). For example, the passenger ranked at the top of the waitlist is identified.

It is determined whether the preferred accommodation the identified waitlisted passenger has requested is available for assignment to the identified passenger (1010). If it is determined that the preferred accommodation is available for assignment to the identified passenger (1010) (e.g., a window seat is available in a particular seat group and the identified passenger was waitlisted for a window seat, and qualifies for seating in the particular seat group), the identified passenger is assigned to the available preferred accommodation (1012) (e.g., the identified waitlisted passenger is assigned to the available window seat). The available preferred accommodation is removed from the identified available accommodations (1014). The identified passenger is removed from the waitlist (1016).

It is determined whether an alternate accommodation had been previously assigned to the identified waitlisted passenger (1018). For example, the identified waitlisted passenger was assigned to a center seat while being placed on the waitlist for reassignment to a preferred window seat. In another example, the identified waitlisted passenger did not have a previous seat assignment. If it is determined that an alternative accommodation had been previously assigned to the identified waitlisted passenger, the alternative accommodation is released and included in the available accommodations (1020).

It is determined whether there are additional available accommodations for possible assignment to passengers on the waitlist (1022). If it is determined that there are additional available accommodations (1022), it is determined whether there are additional passengers on the waitlist (1024). If it is determined that there are additional passengers on the waitlist (1024), the process 1000 continues to monitor the occurrence of an event (1002). If it is determined that there are no available accommodations (1022) or if it is determined that there is no longer any passengers on the waitlist (1024), the process 1000 ends.

If it is determined that an event did not occur (1002), it is determined whether a deadline for assignment of the accommodation has been reached (1004). If it is determined that the deadline for assignment of the accommodation has not been reached (1004), the process 1000 continues to determine whether an event occurred (1002). If it is determined that the deadline for assignment of the accommodation has been reached (1004), the process 1000 ends.

A number of implementations have been described. Nevertheless, it will be understood that various modifications may be made without departing from the spirit and scope of the disclosure. For example, various forms of the flows shown above may be used, with steps re-ordered, added, or removed. Accordingly, other implementations are within the scope of the following claims.

Implementations and all of the functional operations described in this specification may be realized in digital electronic circuitry, or in computer software, firmware, or hardware, including the structures disclosed in this specification and their structural equivalents, or in combinations of one or more of them. Implementations may be provided using one or more computer program products, i.e., one or more modules of computer program instructions encoded on a computer readable medium for execution by, or to control the operation of, data processing apparatus. The computer readable medium may be a machine-readable storage device, a machine-readable storage substrate, a memory device, a composition of matter effecting a machine-readable propagated signal, or a combination of one or more of them. The term "computing system" encompasses all apparatus, devices, and machines for processing data, including by way of example a programmable processor, a computer, or multiple processors or computers. The apparatus may include, in addition to hardware, code that creates an execution environment for the computer program in question, e.g., code that constitutes processor firmware, a protocol stack, a database management system, an operating system, or a combination of one or more of them.

A computer program (also known as a program, software, software application, script, or code) may be written in any appropriate form of programming language, including compiled or interpreted languages, and it may be deployed in any appropriate form, including as a stand-alone program or as a module, component, subroutine, or other unit suitable for use in a computing environment. A computer program does not necessarily correspond to a file in a file system. A program may be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program may be deployed to be executed on one computer or on multiple computers that are located at one site or distributed across multiple sites and interconnected by a communication network.

The processes and logic flows described in this specification may be performed by one or more programmable processors executing one or more computer programs to perform functions by operating on input data and generating output. The processes and logic flows may also be performed by, and apparatus may also be implemented as, special purpose logic circuitry, e.g., an FPGA (field programmable gate array) or an ASIC (application specific integrated circuit).

Processors suitable for the execution of a computer program include, by way of example, both general and special purpose microprocessors, and any one or more processors of any appropriate kind of digital computer. Generally, a processor will receive instructions and data from a read only memory or a random access memory or both. The essential elements of a computer are a processor for performing instructions and one or more memory devices for storing instructions and data. Generally, a computer will also include, or be operatively coupled to receive data from or transfer data to, or both, one or more mass storage devices for storing data, e.g., magnetic, magneto optical disks, or optical disks. However, a computer need not have such devices. Moreover, a computer may be embedded in another device, e.g., a mobile telephone, a personal digital assistant (PDA), a mobile audio player, a Global Positioning System (GPS) receiver, to name just a few. Computer readable media suitable for storing computer program instructions and data include all forms of non volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks. The processor and the memory may be supplemented by, or incorporated in, special purpose logic circuitry.

To provide for interaction with a user, implementations may be provided on a computer having a display device, e.g., a CRT (cathode ray tube) or LCD (liquid crystal display) monitor, for displaying information to the user and a keyboard and a pointing device, e.g., a mouse or a trackball, by which the user may provide input to the computer. Other kinds of devices may be used to provide for interaction with a user as well; for example, feedback provided to the user may be any appropriate form of sensory feedback, e.g., visual feedback, auditory feedback, or tactile feedback; and input from the user may be received in any appropriate form, including acoustic, speech, or tactile input.

Implementations may be provided in a computing system that includes a back end component, e.g., as a data server, or that includes a middleware component, e.g., an application server, or that includes a front end component, e.g., a client computer having a graphical user interface or a Web browser through which a user may interact with an implementation, or any appropriate combination of one or more such back end, middleware, or front end components. The components of the system may be interconnected by any appropriate form or medium of digital data communication, e.g., a communication network. Examples of communication networks include a local area network ("LAN") and a wide area network ("WAN"), e.g., the Internet.

The computing system may include clients and servers. A client and server are generally remote from each other and typically interact through a communication network. The relationship of client and server arises by virtue of computer programs running on the respective computers and having a client-server relationship to each other.

While this specification contains many specifics, these should not be construed as limitations on the scope of the disclosure or of what may be claimed, but rather as descriptions of features specific to particular implementations. Certain features that are described in this specification in the context of separate implementations may also be provided in combination in a single implementation. Conversely, various features that are described in the context of a single implementation may also be provided in multiple implementations separately or in any suitable sub-combination. Moreover, although features may be described above as acting in certain combinations and even initially claimed as such, one or more features from a claimed combination may in some cases be excised from the combination, and the claimed combination may be directed to a sub-combination or variation of a sub-combination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the implementations described above should not be understood as requiring such separation in all implementations, and it should be understood that the described program components and systems may generally be integrated together in a single software product or packaged into multiple software products.

Thus, particular implementations have been described. Other implementations are within the scope of the following claims. For example, the actions recited in the claims may be performed in a different order and still achieve desirable results.

Although the present invention is defined in the attached claims, it is to be understood that the invention can alternatively also be defined in accordance with the following embodiments:

### Embodiments:

1. A computer-implemented method for a reservation system executed using one or more processors, the method comprising:
   receiving a request to select a preferred accommodation for a customer from a user of the reservation system;
   identifying one or more available first accommodations from a plurality of accommodations;
   determining that the preferred accommodation for the customer is not available for selection by the user from the one or more available first accommodations, and in response, placing the request for the preferred accommodation on a waitlist;
   receiving an indication of an occurrence of an event; and
   in response to receiving the indication of the occurrence of the event, automatically:
      identifying, by the reservation system, one or more available second accommodations from the plurality of accommodations;
      determining, by the reservation system, that the preferred accommodation for the customer is available for selection from the one or more available second accommodations; and
      assigning, by the reservation system, the available preferred accommodation to the customer.
2. The method of embodiment 1, further comprising:
   assigning an alternate accommodation to the customer based on determining that the preferred accommodation for the customer is not available for selection by the user, wherein the alternate accommodation is included in the one or more first accommodations; and wherein automatically assigning the available preferred accommodation to the user comprises automatically reassigning the customer's accommodation from the alternate accommodation to the preferred accommodation.
3. The method of embodiment 2, wherein:
   the preferred accommodation is included in a group of accommodations identified as preferable to another group of accommodations that includes the alternate accommodation.
4. The method of embodiment 2, wherein:
   the customer is one of a group of customers, and
   the preferred accommodation is one of a plurality of accommodations, wherein each of the plurality of accommodations is assigned to each of the customers included in the group of customers, the assignment based on one or more criteria specified by the group of customers.
5. The method of embodiment 2, wherein automatically reassigning the customer's accommodation from the alternate accommodation to the preferred accommodation comprises removing the preferred accommodation from the one or more available second accommodations and including the alternate accommodation in the one or more available second accommodations.
6. The method of embodiment 5, further comprising:
   automatically determining, by the reservation system, that another preferred accommodation for another customer is available for selection from the one or more available second accommodations, wherein the other preferred accommodation for the other customer is included on the waitlist; and
   automatically assigning, by the reservation system, the available other preferred accommodation to the other customer.
7. The method of embodiment 1, wherein the event comprises one of a change in availability of the plurality of accommodations, an increase in a number of accommodations included in the plurality of accommodations, and a point in time.
8. The method of embodiment 7, wherein the point in time occurs at regular time intervals or at a specified time.
9. The method of embodiment 8, wherein the specified time is identified based on one or more criteria associated with the accommodation.
10. The method of embodiment 8, wherein a frequency of the regular time intervals increases as an identified milestone associated with the accommodation approaches.
11. The method of embodiment 7, wherein the change in availability of the plurality of accommodations comprises one of an unblocking of accommodations, a release of accommodations, a physical reconfiguration of accommodations, a marketing reconfiguration of accommodations, and a sales reconfiguration of accommodations.
12. The method of embodiment 7, wherein the increase in a number of accommodations included in the plurality of accommodations comprises a change in a provider of the accommodations.
13. The method of embodiment 1, wherein the user causes the event to occur.
14. The method of embodiment 1, wherein the waitlist comprises requests listed in a hierarchical order and placing the request for the preferred accommodation on the waitlist comprises adding the request to the waitlist at a location in the hierarchical list, the location based on one or more criteria associated with the customer and/or the travel record.
15. The method of embodiment 14, wherein automatically assigning the available preferred accommodation to the customer comprises determining that the customer is eligible for assignment to the accommodation based on the location of the request for the preferred accommodation on the waitlist.
16. The method of embodiment 1, further comprising automatically removing, by the reservation system, the request for the preferred accommodation from the waitlist in response to automatically assigning the available preferred accommodation to the customer.
17. The method of embodiment 1, wherein the accommodation comprises one of a seat on an airplane, train, or bus, a room in a hotel, a time and date reservation at a spa, and a cabin on a cruise ship.
18. A system comprising:
   one or more computers; and
   a computer-readable medium coupled to the one or more computers having instructions stored thereon which, when executed by the one or more computers, cause the one or more computers to perform operations comprising:
      receiving a request to select a preferred accommodation for a customer from a user of the reservation system;
      identifying one or more available first accommodations from a plurality of accommodations;
      determining that the preferred accommodation for the customer is not available for selection by the user from the one or more available first accommodations, and in response, placing the request for the preferred accommodation on a waitlist;
      receiving an indication of an occurrence of an event; and
      in response to receiving the indication of the occurrence of the event, automatically:
         identifying, by the reservation system, one or more available second accommodations from the plurality of accommodations;
         determining, by the reservation system, that the preferred accommodation for the customer is available for selection from the one or more available second accommodations; and
         assigning, by the reservation system, the available preferred accommodation to the customer.
19. A computer storage medium encoded with a computer program, the computer program comprising instructions that when executed by one or more processors cause the one or more processors to perform operations comprising:
   receiving a request to select a preferred accommodation for a customer from a user of the reservation system;
   identifying one or more available first accommodations from a plurality of accommodations;
   determining that the preferred accommodation for the customer is not available for selection by the user from the one or more available first accommodations, and in response, placing the request for the preferred accommodation on a waitlist;
   receiving an indication of an occurrence of an event; and
   in response to receiving the indication of the occurrence of the event, automatically:
      identifying, by the reservation system, one or more available second accommodations from the plurality of accommodations;
      determining, by the reservation system, that the preferred accommodation for the customer is available for selection from the one or more available second accommodations; and
      assigning, by the reservation system, the available preferred accommodation to the customer.

A number of implementations have been described. Nevertheless, it will be understood that various modifications may be made without departing from the spirit and scope of the following claims. Accordingly, other implementations are within the scope of the following claims.

## Claims

1. A computer-implemented method for a reservation system executed using one or more processors, the method comprising:
receiving a request to select a preferred accommodation for a customer from a user of the reservation system;
identifying one or more available first accommodations from a plurality of accommodations;
determining that the preferred accommodation for the customer is not available for selection by the user from the one or more available first accommodations, and in response, placing the request for the preferred accommodation on a waitlist;
receiving an indication of an occurrence of an event; and
in response to receiving the indication of the occurrence of the event, automatically:
identifying, by the reservation system, one or more available second accommodations from the plurality of accommodations;
determining, by the reservation system, that the preferred accommodation for the customer is available for selection from the one or more available second accommodations; and
assigning, by the reservation system, the available preferred accommodation to the customer.

2. The method of claim 1, further comprising:
assigning an alternate accommodation to the customer based on determining that the preferred accommodation for the customer is not available for selection by the user, wherein the alternate accommodation is included in the one or more first accommodations; and wherein automatically assigning the available preferred accommodation to the user comprises automatically reassigning the customer's accommodation from the alternate accommodation to the preferred accommodation.

3. The method of claim 2, wherein:
the preferred accommodation is included in a group of accommodations identified as preferable to another group of accommodations that includes the alternate accommodation.

4. The method of claim 2, wherein:
the customer is one of a group of customers, and
the preferred accommodation is one of a plurality of accommodations, wherein each of the plurality of accommodations is assigned to each of the customers included in the group of customers, the assignment based on one or more criteria specified by the group of customers.

5. The method of claim 2, wherein automatically reassigning the customer's accommodation from the alternate accommodation to the preferred accommodation comprises removing the preferred accommodation from the one or more available second accommodations and including the alternate accommodation in the one or more available second accommodations.

6. The method of claim 5, further comprising:
automatically determining, by the reservation system, that another preferred accommodation for another customer is available for selection from the one or more available second accommodations, wherein the other preferred accommodation for the other customer is included on the waitlist; and
automatically assigning, by the reservation system, the available other preferred accommodation to the other customer.

7. The method of claim 1, wherein the event comprises one of a change in availability of the plurality of accommodations, an increase in a number of accommodations included in the plurality of accommodations, and a point in time.

8. The method of claim 7, wherein the change in availability of the plurality of accommodations comprises one of an unblocking of accommodations, a release of accommodations, a physical reconfiguration of accommodations, a marketing reconfiguration of accommodations, and a sales reconfiguration of accommodations.

9. The method of claim 7, wherein the increase in a number of accommodations included in the plurality of accommodations comprises a change in a provider of the accommodations.

10. The method of claim 1, wherein the waitlist comprises requests listed in a hierarchical order and placing the request for the preferred accommodation on the waitlist comprises adding the request to the waitlist at a location in the hierarchical list, the location based on one or more criteria associated with the customer and/or the travel record.

11. The method of claim 10, wherein automatically assigning the available preferred accommodation to the customer comprises determining that the customer is eligible for assignment to the accommodation based on the location of the request for the preferred accommodation on the waitlist.

12. The method of claim 1, further comprising automatically removing, by the reservation system, the request for the preferred accommodation from the waitlist in response to automatically assigning the available preferred accommodation to the customer.

13. The method of claim 1, wherein the accommodation comprises one of a seat on an airplane, train, or bus, a room in a hotel, a time and date reservation at a spa, and a cabin on a cruise ship.

14. A system comprising:
one or more computers; and
a computer-readable medium coupled to the one or more computers having instructions stored thereon which, when executed by the one or more computers, cause the one or more computers to perform operations comprising:
receiving a request to select a preferred accommodation for a customer from a user of the reservation system;
identifying one or more available first accommodations from a plurality of accommodations;
determining that the preferred accommodation for the customer is not available for selection by the user from the one or more available first accommodations, and in response, placing the request for the preferred accommodation on a waitlist;
receiving an indication of an occurrence of an event; and
in response to receiving the indication of the occurrence of the event, automatically:
identifying, by the reservation system, one or more available second accommodations from the plurality of accommodations;
determining, by the reservation system, that the preferred accommodation for the customer is available for selection from the one or more available second accommodations; and
assigning, by the reservation system, the available preferred accommodation to the customer.

15. A computer storage medium encoded with a computer program, the computer program comprising instructions that when executed by one or more processors cause the one or more processors to perform operations comprising:
receiving a request to select a preferred accommodation for a customer from a user of the reservation system;
identifying one or more available first accommodations from a plurality of accommodations;
determining that the preferred accommodation for the customer is not available for selection by the user from the one or more available first accommodations, and in response, placing the request for the preferred accommodation on a waitlist;
receiving an indication of an occurrence of an event; and
in response to receiving the indication of the occurrence of the event, automatically:
identifying, by the reservation system, one or more available second accommodations from the plurality of accommodations;
determining, by the reservation system, that the preferred accommodation for the customer is available for selection from the one or more available second accommodations; and
assigning, by the reservation system, the available preferred accommodation to the customer.
